Europäisches Patentamt

(19) European Patent Office

Office européen des brevets

(11) Publication number: **0 444 850 A2**

(12) # EUROPEAN PATENT APPLICATION

(21) Application number: **91301495.7**

(22) Date of filing: **25.02.91**

(51) Int. Cl.⁵: **G11B 7/00, G11B 7/24,**
**G11B 21/21, G11B 7/12**

(30) Priority: **26.02.90 JP 42433/90**

(43) Date of publication of application:
**04.09.91 Bulletin 91/36**

(84) Designated Contracting States:
**DE FR GB**

(71) Applicant: **Kabushiki Kaisha Toshiba**
**72, Horikawa-cho Saiwai-ku**
**Kawasaki-shi (JP)**

(72) Inventor: **Goto, Kenya, c/o Intellectual**
**Property Division**
**Kabushiki Kaisha Toshiba, 1-1 Shibaura**
**1-chome**
**Minato-ku, Tokyo 105 (JP)**

(74) Representative: **Freed, Arthur Woolf et al**
**MARKS & CLERK 57-60 Lincoln's Inn Fields**
**London WC2A 3LS (GB)**

(54) **Optical floppy disk system.**

(57)  An optical floppy disk system having an optical head (5) which has a convexity with a predetermined curvature. A plurality of slots is formed in the convexity, and at least one semiconductor laser chip placed in the convexity. The optical head (5) faces an optical floppy disk (3). When the optical floppy disk (3) is loaded into the driver of the optical floppy disk system and rotated, the opticah head (5) is separated from the optical floppy disk (3), with a narrows gap formed between the disk and the head by means an air bearing resulting from a Bernoulli's gap formed between the optical floppy disk (3) and the optical head (5).

EP 0 444 850 A2

F I G. 1A

## OPTICAL FLOPPY DISK SYSTEM

The present invention relates to an optical floppy disk system using optical disks as a recording medium.

Recently optical disk memories have come into use in various types of memory systems. Various types of optical memories have their respective uses. For example, a re-writable memory optical disk is the most suitable for computer external storage, a WORM (Write Once Read Memory) optical disk is the most suitable for long-term retention document file storage and a ROM (Read Only Memory) optical disk is the most suitable for storage of the instruction manuals of various types of equipment. The optical disk memory systems have the following advantages over magnetic disk memory systems:

(1) Small size, and large storage capacity
(2) No-contact between head and disk
(3) Increased life of recorded data
(4) Protection against external magnetic fields

It is true that the optical disk memory systems having such technical advantages over magnetic disk memory systems have been used in for less numbers than magnetic disk memory systems. This is because the optical disk memory systems are expensive, though technically less nature than the magnetic disk memory systems. There are three more specific reasons, which are:

1. The optical head is very complex in structure and costly.

2. The optical head is heavy, and thus the access time is long.

3. The optical disk material and its manufacturing process are costly.

Of the above reasons, the first reason is the most serious. That is, the optical head needs an optical system which is located in an optical path extending from a semiconductor laser through an optical disk to a photodiode, and which comprises a beam shaping prism, a polarizing beam splitter, a collimator lens, a quarter-wavelength plate, an objective lens and so on. Moreover, very severe conditions are imposed upon each element of the optical system for wave aberration. This is a serious obstacle to the wide use of the optical disk memory systems.

Allowable wave aberration of the optical components for use in combination with an optical disk will be described in more detail. In order to narrow a laser beam down to a diffraction limit, it is required to keep constant the wave aberration of each optical component, ranging from the semiconductor laser to the objective lens. That is, in an ordinary optical head, the root mean square (RMS) of the allowable maximum wave aberrations of a semiconductor laser, a diffraction grating, a collimator lens, a beam splitter, an objective lens, an adjusting allowance of the objective lens and assembling allowances of optical components including an optical disk substrate must be kept below Maréchel Criterion $(\delta\omega)MC$. In other words, a range of up to a radius of a beam, at which the beam intensity is lowered to 80% of the intensity in the center of the beam, is allowed. The upper limit of the range is $0.07\lambda$ in terms of numeric value. According to the standard specification, $(\delta\omega)_{DISC} = 0.05\lambda$ is allowed for the optical disk substrate itself. Assuming that the adjusting allowance $(\delta\omega)_{ADJT}$ of the objective lens in assembling to the head, which belongs to the know-how of optical head makers, is $0.025\lambda$, the allowable maximum wave aberration of each optical component must be much restricted in order to attain $(\delta\omega)_{MC} \leqq 0.07\lambda$. That is to say, the restrictions are as follows:

$$(\delta\omega)_{MC} \leqq \lambda/4 \quad (1)$$
$$(\delta\omega)^2_{MC} = (\delta\omega)^2_{ADJT} + (\delta\omega)^2_{LD} + (\delta\omega)^2_{GT} + (\delta\omega)^2_{BS} + (\delta\omega)^2_{CL} + (\delta\omega)^2_{OL} \quad (2)$$

where $(\delta\omega)_{ADJT}$ is the adjusting allowance, and $(\delta\omega)_{LD}$, $(\delta\omega)_{GT}$, $(\delta\omega)_{BS}$, $(\delta\omega)_{CL}$ and $(\delta\omega)_{OL}$ are the wave aberration of the semiconductor laser, the diffraction grating, the beam splitter, the collimator lens and the objective lens, respectively.

The semiconductor laser is provided with a plane-parallel window. Moreover, some astigmatic difference must also be allowed for as trade-off for better immunity against feedback light induced noise. Thus, $(\delta\omega)_{LD}$ will be of the order of $0.013\lambda$. Let the wave aberration $(\delta\omega)_{GT}$ of the diffraction grating, which is a plane optical component, and the that $(\delta\omega)_{BS}$ of the beam splitter be $0.012\lambda$ and $0.015\lambda$, respectively. Then, the wave aberration $(\delta\omega)_{CL}$ of the collimator lens, which is an element of a spherical curvature, and that $(\delta\omega)_{OL}$ of the objective lens will be $0.025\lambda$ and $0.03\lambda$, respectively. This is because they are difficult to make small as compared with a plane component. Thus, $(\delta\omega)_{MC}$ will be $0.072\lambda$, which is close to the desired value. To make it up smaller value of the wave aberration, it will be necessary to reduce the adjusting allowance of the objective lens which is dependent on the technical matter of the optical head maker. As may be seen from expression (1), even if the wave aberration of the objective lens is restricted to $0.03\lambda$ without making the wave aberration of the collimator lens below $0.025\lambda$, the beam waist will become too thick, thereby increasing the probability that bit errors are made in reproducing an optical disk. In view of the above, it is clear that a desired value for the wave aberration of the collimator lens must be $0.025\lambda$ or less. It is difficult for a spherical single lens to attain the desired value, $0.025\lambda$. As a collimator lens, therefore, a spherical-glass combination lens (doublet) has been used. The reason is that the formal length of an aspherical plastic lens greatly varies with temperature variations, while an aspherical glass lens is too expensive to be caused as a collimator lens.

The conditions imposed upon optical components, which are severe in terms of wave aberration, was described above in detail. Furthermore, the optical head also requires a high-accuracy objective-lens actuator. That is, the surface of a rotating optical disk fluctuates up and down within a range of $\pm 1$ mm, due to the rotation and distortion of the disk. Therefore, in order to position the focal point (beam waist) of an objective lens having a small focal depth onto the information recording surface of the optical disk with an accuracy of $\pm 1$ $\mu$m at all times, control is needed to move the objective lens fast, for a maximum of 2 mm, along its axis. The allowable eccentricity of a molded optical disk and that of a disk player add up to about 125 $\mu$m. Moreover, in order to allow the optical head to have fast access to a recorded track or a unrecorded track, control is needed to move the objective lens fast, by through $\pm 400$ $\mu$m, along a radial line of the optical disk. Such control is performed by the objective-lens actuator. As system for moving the objective lens through 2 mm ($\pm 1$ mm) vertically with respect to the disk surface and by 0.8 mm ($\pm 400$ $\mu$m) along a radial line of the disk, which are economically controllable ranges, only one system is available at present, which utilizes electromagnetic force produced by flowing current through a coil placed in a magnetic field. As described above, the conventional optical head is heavy because it contains many optical components. Thus, even if a highest-performance actuator is used, there is a limit to access speed.

As described above, the problem with the conventional optical disk memory system is that its optical head, in particular, is complex and costly.

It is therefore an object of the present invention to provide an optical floppy disk drive which has an optical head that is simple in construction and light in weight and thus permits the manuracture of an inexpensive optical disk memory system.

The optical floppy disk drive according to the present invention comprises an optical floppy disk and an optical head having a convexity which faces the optical floppy disk and in which a plurality of slots are formed and at least one semiconductor laser chip is embedded, and is characterized in that the optical head maintains separation from the optical floppy disk with a narrow gap therebetween by means of air bearing formed by rotating the optical floppy disk.

In the present invention, an optical floppy disk (i.e., a flexible optical recording medium) is used. Also, use is made of a phenomenon based on the Bernoulli's theorem by which head-to-disk spacing is maintained constant when the floppy disk is rotated at a high speed. Thereby, many optical components, including an objective lens, which have been used in conventional optical heads need not be used. Further, the near-field pattern of the semiconductor laser can directly be applied onto the recording surface of the optical floppy disk, to thereby write and read information.

According to the present invention, therefore, neither an objective lens nor other optical components omit need to be incorporated in the optical system of the optical head. Hence, the system can be made very lightweight and small in size. In addition, since the optical head faces the disk, with a gap therebetween, which is narrow owing to the formation of air bearing, an focus control actuator for an objective lens which has so far been essential for an optical disk is no longer necessary. Not having optical components or a focus control actuator, the optical head can be very small and light weight. Furthermore, the downsizing and lightening of the optical head will reduce an access time of the disk drive.

This invention can be more fully understood from the following detailed description when taken in conjunction with the accompanying drawings, in which:

Fig. 1A is a plan view of an optical floppy disk device according to an embodiment of the present invention;

Fig. 1B is a sectional view taken along line A - A' of Fig. 1A;

Fig. 2A is a plan view of an optical head;

Fig. 2B is a sectional view taken along A - A' of Fig. 2A;

Fig. 3 is a perspective view of the optical head with portions broken away;

Fig. 4A is a perspective view for use in explanation of a method of manufacturing the optical head;

Fig. 4B is a perspective view illustrating how the optical head shown in Fig. 4A is manufactured by another method;

Fig. 5 is a sectional view for use in explanation of the principle of air bearing;

Fig. 6 is a perspective view of a semiconductor laser chip which is embedded in the optical head;

Fig. 7 illustrates a positional relationship between the semiconductor laser chip and the optical floppy disk;

Fig. 8 illustrates an arrangement for use in explanation of signal reproduction;

Fig. 9 illustrates a relationship between the width of a gap between the optical head and the disk and the head crash occurrence time;

Fig. 10 illustrates cartridge-thickness versus recording density for various recording mediums;

Fig. 11 is a sectional view of a small-lens embedded optical head according to another embodiment of the present invention;

Fig. 12 is a sectional view of a small-lens embedded optical head according to still another embodiment of the present invention;

Fig. 13 is a perspective view of an optical head for WORM according to a further embodiment of the present invention;

Fig. 14 is a perspective view of an optical head according to a still further embodiment of the present invention;

Fig. 15 is a schematic illustration of a two-sided optical floppy disk device according to another embodiment of the present invention;

Fig. 16A illustrates an arrangement of a laser and an object disk; and

Fig. 16B illustrates laser output p versus distance x between the laser and the object disk of Fig. 16A.

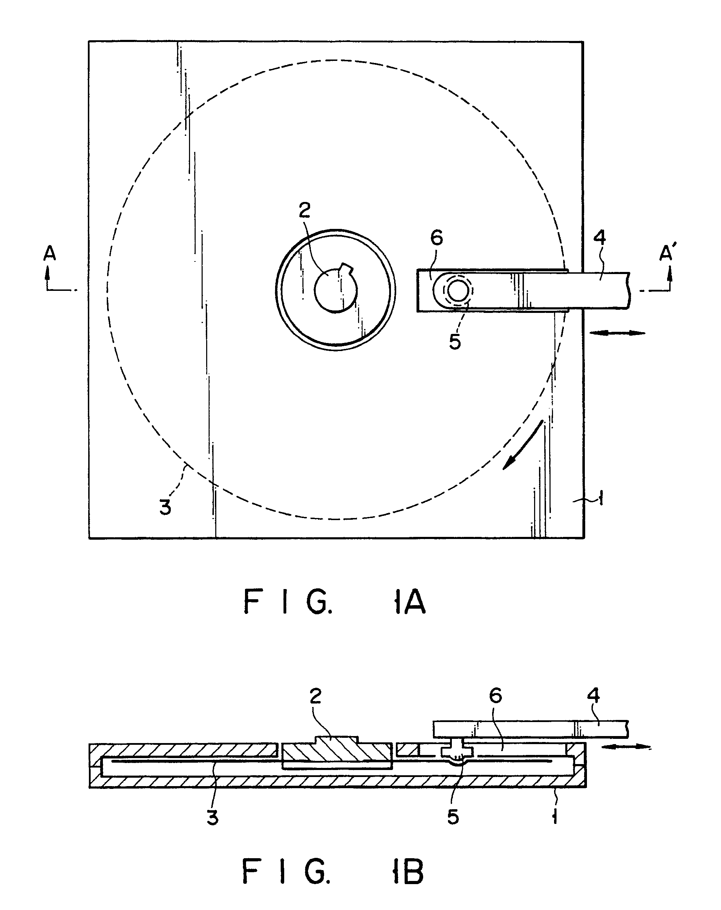

Referring now to Figs. 1A and 1B, an optical floppy disk 3 having a motor hub 2 attached to its central portion is housed in a cartridge case 1 having a thickness of about 3mm. On one side of the cartridge 1 is opened a window 6 through which an optical head 5 mounted on a slide arm 4 faces the disk 3.

The optical floppy disk 3 is formed of a flexible film, a recording layer on the flexible film and a surface protective layer on the recording film and has a thickness of approximately 40 μm. As the information recording film an organic film containing cyanine dye is used. The recording film records information in the form of a hole (pit) formed by laser light absorption. The information is reproduced by use of a difference in reflectance between the pit and other portions. As a rewritable recording layer use may be made of an organic bi-layer structure or a layer employing a phase change caused by irradiation of light. Of course, an inorganic film such as $TeO_xCo$ may also be used as the information recording film. Where an organic film is used, there is no need for vacuum technology such as sputtering in producing recording mediums. Coating technology can be used instead. This enables the manufacture of low-cost optical floppy disks with V grooves.

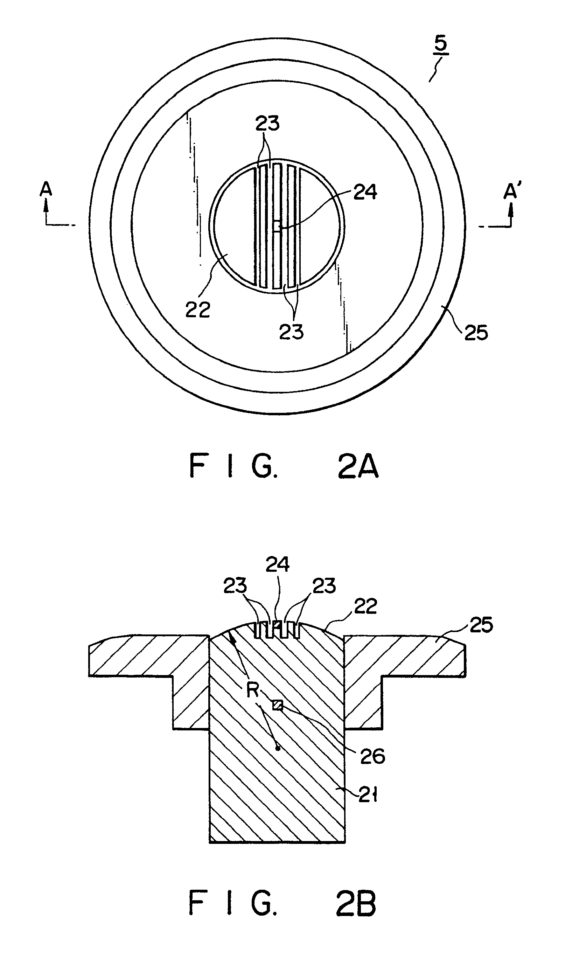

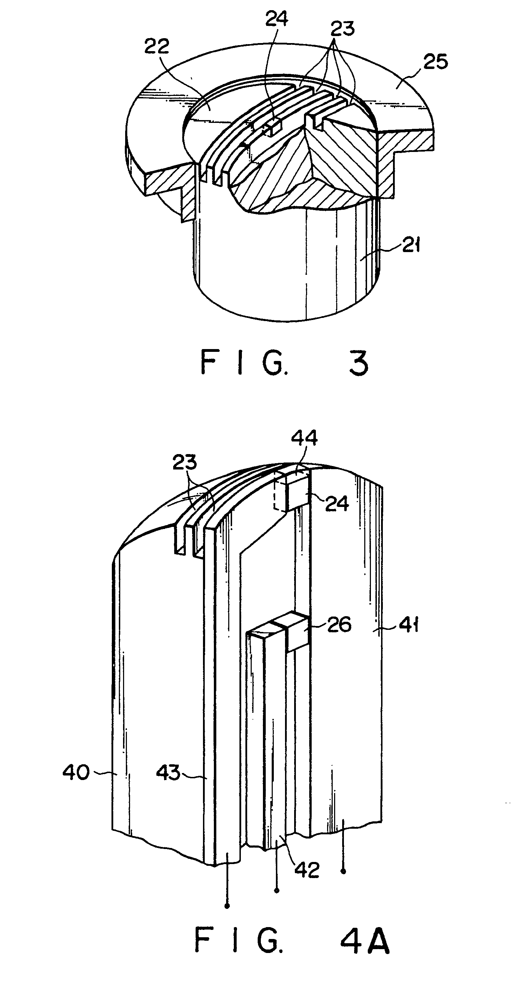

Fig. 2A is a plan view of the optical head 5 and Fig. 2B is a sectional view taken along line A - A' of Fig. 2A. In Fig. 3 there is shown a perspective view of the optical head 5 with portions broken away.

The optical head 5 is constructed, as shown, from a cylindrical body 21 having a convexity 22 of predetermined curvature R formed on its tip, a ring stabilizer 25 attached to the body to surround it and a semiconductor laser chip 24 embedded in the center of the convexity 22. The semiconductor laser chip 24 is disposed such that its light-emitting plane directs upward and the direction of a line normal to the pn junction plane may coincide with the direction of tracks of the optical floppy disk 3. The cylindrical body 21 also serves as a heatsink for the embedded semiconductor laser chip 24.

On the convexity 22 are formed slots 23, the number of which is, for example, four in the present embodiment, with the embedded semiconductor laser chip 24 disposed therebetween. These slots 23 are cut in the direction of rotation of the optical floppy disk 3, i.e.,

in the direction of tracks. The slots 23 are adapted to set the distance of a gap (what is called the Bernoulli's gap) formed between the optical head 5 and the rotating disk 3 by air bearing (i.e., a layer of air) between the disk and the head at a constant optimum value. The cross-sectional area of each slot is very significant. That is, an increase of the cross-sectional area of the slot will make the gap between the disk and the laser chip narrower.

The ring stabilizer 25 is adapted to keep stable the above Bernoulli's gap resulting from rotation of the optical floppy disk 3. That is, the stabilizer serves as a stabilizing plate (Bernoulli's plate) which permits air flow resulting from high-speed rotation of the optical floppy disk 3 to occur in the central portion of the optical head uniformly.

In the optical head 5, by way of example, the diameter of the cylindrical body is about 3 mm, the radius of curvature of the convexity 22 is about 40 mm, the diameter of the ring stabilizer 25 is about 9 mm. The width of each of the two slots adjacent to the semiconductor laser chip 24 is in the order of 0.1 mm and the width of each of the two outer slots is in the order of 0.075 mm.

In the cylindrical body 21 a monitoring photodiode chip 26 is also embedded in the rear of the semiconductor laser chip 24. The photodiode chip 26 serves as a photo detector which detects light emitted from the semiconductor laser chip 24 backward or light reflected from the information recording surface of the optical floppy disk according to information thereon and transmitted through the semiconductor laser chip 24.

The semiconductor laser chip 24 and the photodiode chip 26 can be embedded in the optical head 5 and their respective electrodes can be formed in the following manner. First, two semi-cylindrical bodies are prepared for the cylindrical body 21. One of the two semi-cylindrical bodies is shown in Fig. 4A. That is, electrode leads 41, 42 and 43 are previously formed on the surface of the semi-cylindrical body 40 made of, for example, ceramic, that is mated with the surface of the other semi-cylindrical body. The electrode lead 41 is adapted for use with both of the semiconductor laser chip and the photodiode chip, while the electrode leads 42 and 43 are adapted for use with the semiconductor laser chip and the photodiode chip, respectively. In the case of Fig. 4A, the convexity of predetermined curvature including the electrodes and the slots 23 has already been formed on the tip of the body. The photodiode chip 26 is mounted in the center of the semi-cylindrical body 40 and the semiconductor laser chip 24 is mounted in the neighborhood of the tip of the head, the photodiode and the semiconductor laser chips being in alignment with each other as shown. The electrodes of the photodiode and the laser chip are connected to the electrode leads by soldering. On the light emitting edge of the semiconductor laser chip 24 a film 44 adapted for antireflection and surface protection is formed at the time of manufacturing of the laser chip or after mounting thereof. The semi-cylindrical body which has the laser chip 24 and the photodiode chip 26 mounted and another semi-cylindrical body not shown are mated with each other. Subsequently the ring stabilizer 25 is attached, whereby the optical head as shown in Fig. 2A and Fig. 3 is completed.

Note that the curved surface or the slots on the tip of the optical head may be produced after the above semi-cylindrical bodies have been mated with each other.

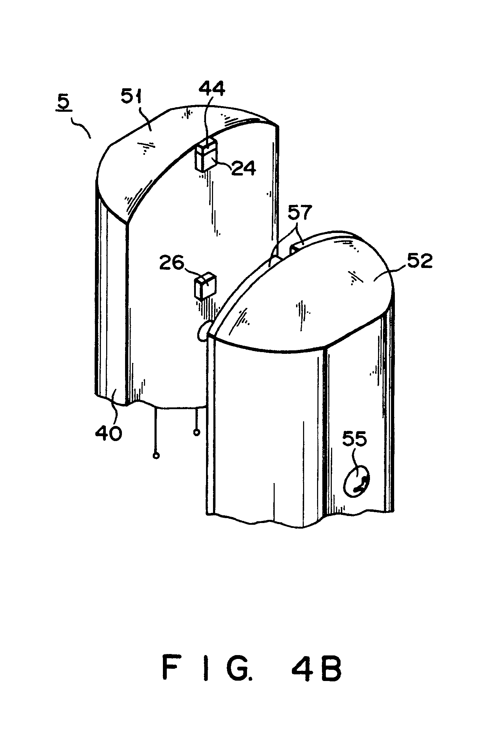

Fig. 4B is a perspective view illustrating how the optical head shown in Fig. 4A is manufactured by another method.

Referring to Fig. 4B, an optical head 5 is formed of a metallic material, such as copper having high thermal conductivity (e.g., oxygen free copper) or aluminum. The optical head 5 is cylindrical, for example, and is made up of two semicylindrical parts whose central faces contain the central axis of the optical head 5. The two semicylindrical parts are coupled such that their central faces are put one upon the other. One of the two parts has a photodiode chip 26 and a semiconductor laser chip 24, and these chips are soldered to the central face by means of indium such that one face of each chip serves as an electrode. The other part has a spacer member 57 formed of an insulating material such as Teflon (trademark) and provided on the central face. The spacer member 57 has a groove into which the semiconductor laser chip and the photodiode chip are fitted when the semicylindrical parts are coupled together. The one end portions of the semicylindrical parts constitute hemispherical portions 51 and 52, respectively, and the corresponding portions of the spacer member 57 are conformable to the hemispherical portions 51 and 52. Therefore, after the semicylindrical parts are coupled together with the spacer member 57 interposed, the tip end of the head 5 constitutes a spherical portion.

Since the optical head 5 having the above structure does not require any other heat sink, it can be easily worked.

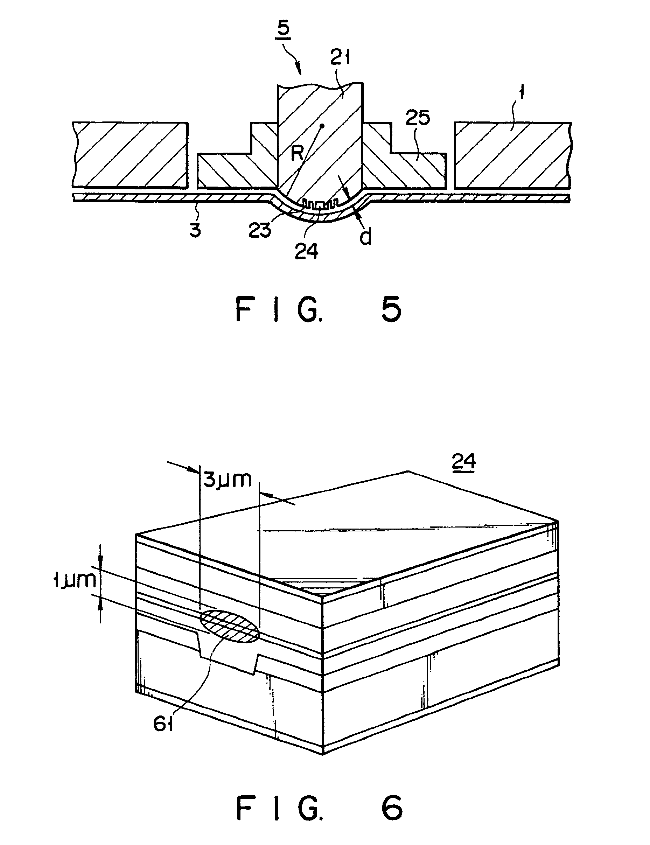

Fig. 5 is an enlarged view illustrating the relationship between the optical head described above and an optical floppy disk when an optical floppy disk system equipped with the optical head operates. Although not shown, when the optical floppy disk system is stopped, the periphery of the optical floppy disk hangs down due to its flexibility and dead weight. When the optical floppy disk is rotated at a high speed by a disk drive motor, air is allowed to flow between the optical floppy disk and the optical head with the result that the disk is drawn toward the optical head because of the Bernoulli's theorem and distributes the force of the air between the disk and the head. At this time, between the optical head and the optical floppy disk is formed a small gap $\underline{d}$ which is called the Bernoulli's gap (for example, 0.5 to 1 µm) which depends on the grove cross sectional area of this curvature R of the tip of the optical head, the slots 23 and the size of the ring stabilizer 25. This state enables optimum recording and reproducing based on the near-field pattern of the semiconductor laser chip 24 embedded in the tip of the optical head 5.

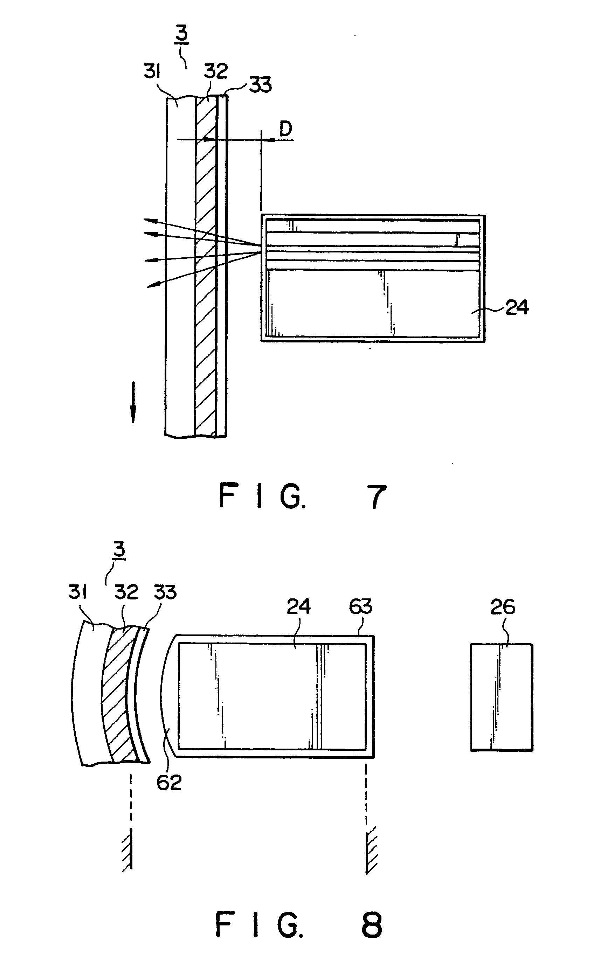

Next, reference is made to Fig. 6 to explain how a laser beam of the semiconductor laser chip 24 is directed onto the recording surface of the optical floppy disk 3. The semiconductor laser chip 24 can be a double-hetero junction, current-confinement type of laser using an AℓGaAs-system material as shown. The near-field pattern 61 in the light-emerging plane has a size of about 1 µm in the direction parallel to the plane of the pn junction and about 3 µm in the direction normal to the plane of the pn junction, which can be produced by general technology of today. The laser beam broadens at an angle of 0.9 rad in the direction parallel to the plane of the pn junction and at an angle of 0.3 rad in the direction normal to the plane of the pn junction. The laser beam is directed from the semiconductor laser chip 24 onto the recording surface of the optical floppy disk 3 as illustrated in Fig. 7. In general, the optical floppy disk 3 is comprised of a substrate 31, a recording layer 32 and a protective layer 33 as shown. Assuming the distance D between the light-emerging plane of the laser chip and the recording surface of the disk to be $D = 2$ µm, the size of the laser beam on the recording surface will be 3.6 µm x 2.8 µm. When $D = 1$ µm, the size of the laser beam will be 3.3 µm, and when $D = 0.5$ µm, the size will be 3.15 µm x 1.45 µm. If, therefore, the gap between the optical head and the optical floppy disk produced by the air bearing is in the range from 0.1 to 0.5 µm, making the light-emerging plane of the semiconductor laser chip will enable direct recording on and reproducing from the disk by use of an output beam of the semiconductor laser chip without using any optical system.

Also, the above-described effect will introduce a great technical innovation in the semiconductor laser technology used with optical heads. That is, with optical heads having a normal optical system, the power transmission efficiency of laser output to the optical disk surface is about 30%. On the other hand, the power transmission efficiency in the optical disk system of the present invention is 100%. Therefore, a semiconductor laser chip having an output of 5 to 8 mW can be used as the laser chip for the information writing 24. In other words, there is no need for technical efforts to make the output of a semiconductor laser chip itself higher. Only adding some improvements to the present technology will readily circumvent wavelength-dependent output power problems.

Next, reference is made to Fig. 8 to describe an example of a specific signal detecting operation in an information reproduction mode. The semiconductor laser chip 24 is covered with a protective film 62 to prevent oxidation when it is made of an AℓGaAs-system material. On the light-emerging plane of the laser chip is formed an anti-reflection and anti-oxidation film (which corresponds to the antireflection film 44 shown in Fig. 4A). The rear surface of the semiconductor laser chip 24 and the recording surface of the optical floppy disk 3 form a Fabry-Perot resonator. When the semiconductor laser chip 24 is driven by a current which is slightly lower than an oscillation threshold current, a beam of light (not laser light) is emitted onto the optical floppy disk 3. Reflected light having intensity corresponding to recorded information is returned from the optical floppy disk 3 back to the semiconductor laser chip 24. When the reflected light is intense, the semiconductor laser chip 24 is excited to laser oscillation by the resonator formed of the rear surface of the laser chip and the recording surface of the disk, whereby a high output of light is produced. The photodiode chip 24 disposed in the rear of the semiconductor laser chip 24 can detect on and off of the laser oscillation on the basis of the intensity of a light signal from the laser chip, thus permitting discrimination between "0" and "1" of binary information.

The information reading operation is not limited to this method. The semiconductor laser chip 24 may normally be placed in the laser oscillation state. In this case, the magnitude of a signal of light reflected from the optical floppy disk 3 and transmitted through the semiconductor laser chip 24 can be detected by the photodiode chip 26 to thereby discriminate between "0" and "1" of recorded information.

Accordingly, the optical floppy disk system according to the present embodiment has the following advantages.

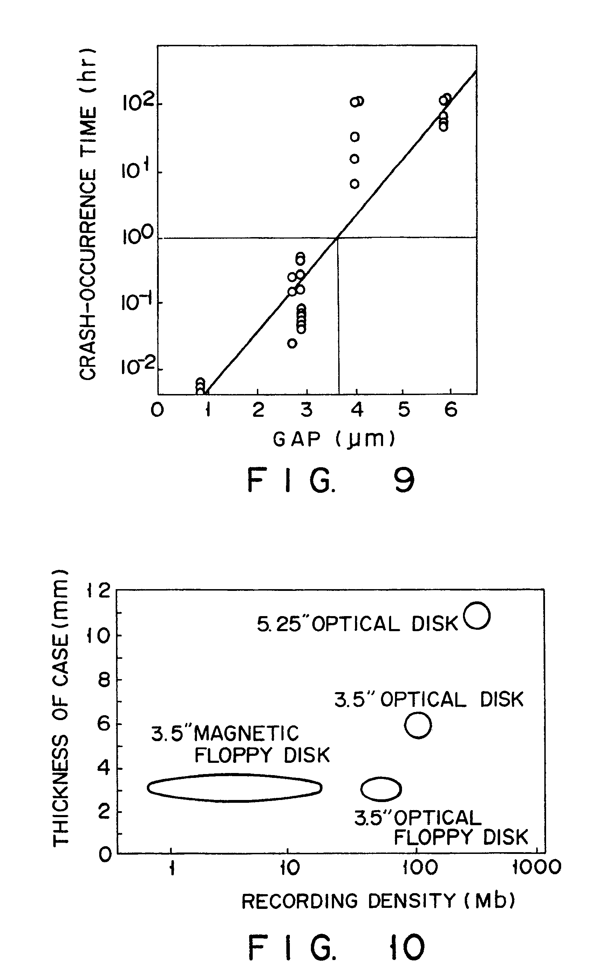

First, the optical head can face the rotating optical floppy disk with a small gap therebetween. In the case of a magnetic disk, a gap with an accuracy of the order of 0.1 μm is needed to cause a magnetic head to maintain separation from the disk. In the present embodiment, on the other hand, a gap greater than before can be used to cause a head to maintain separation from a disk. Since the floppy disk used is flexible, the head crash is difficult to occur. By the way, according to an experiment in dust with a particle size of 1.6 to 2.3 μm, when the gap increases by 1 μm the time taken until head crash occurs is increased by a factor of about ten as illustrated by a graph of Fig. 9. The graph of Fig. 9 is based on an experiment when a disk has a speed of rotation of 3600 rpm.

Air bearing produced by air flow is utilized. Even if, therefore, small dust goes between the optical head and the optical floppy disk to cause faulty reading, the dust will be swept away. Thus, the faulty reading (read error) is limited to a soft error.

Second, the optical head does not contain any optical components such as an objective lens, a prism, etc. Moreover, if the head is shaped so that the thickness of the air bearing may become constant, the need for an actuator adapted for focus control, which has been needed for an optical disk so far, will be eliminated. Thus, the optical head becomes very compact and lightweight.

Third, an access time of the disk drive can be much shortened by making the optical head compact and light weight.

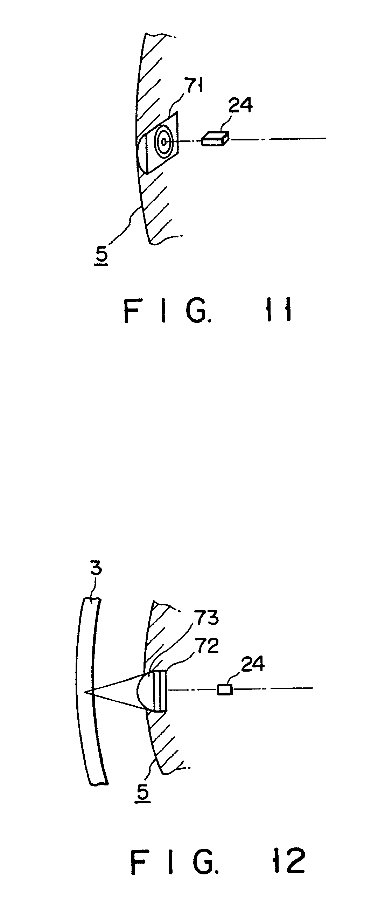

Fourth, the disk cartridge can be made thin and lightweight because the optical floppy disk is flexible. Fig. 10 shows a comparison in thickness of cartridge among various types of disks. The thicknesses of cartridges for the currently leading 2.5-inch optical disk and 3.5-inch optical disk are 11 mm and 6 mm, respectively, whereas a cartridge for the 3.5-inch optical floppy disk can be made to a thickness of the order of 3 mm, which is as thick as the 3.5-inch magnetic floppy disk.

Fifth, the optical floppy disk system can be manufactured at a low cost. The main reasons are the following two: of drive components the most expensive head optical components are not needed; and an actuator for focus control is not needed. Moreover, where an organic film, such as dye polymer, is used as a recording film, there is no need for manufacturing processes and manufacturing facilities using vacuum technology. In addition, the substrates of recording medium can be manufactured at low cost by use of a cookie cutter without depending on injection molding.

Although, in the above embodiment, no optical component is disposed between the semiconductor laser chip and the optical floppy disk, a simple optical component may be disposed to shape the near-field pattern. For example, a small cylindrical grating lens 71 may be disposed in front of the semiconductor laser chip 24 disposed on the tip of the optical head as illustrated in Fig. 11. Alternatively, a blaze grating lens 72 and a cylindrical lens 73 may be disposed as illustrated in Fig. 12. These optical components are not adapted to cause a broadened laser beam to converge to a small spot as in conventional optical heads and hence require no severe specifications. Even if those optical components were provided, the optical head would not become so large in size. Thus, the addition of those components would be allowed.

Although, in the above embodiment, the optical head is provided with only one write or read semiconductor laser chip, plural semiconductor laser chips may be provided side by side.

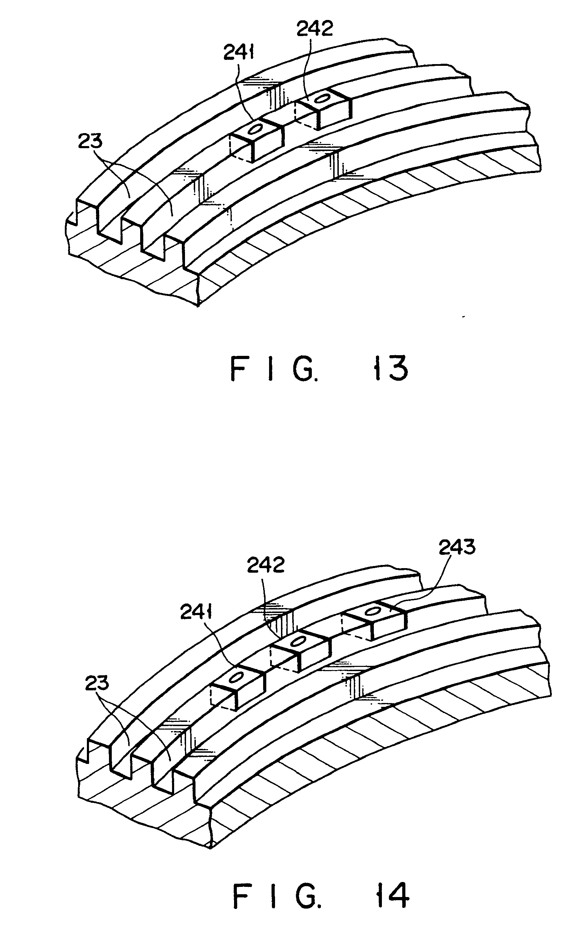

For example, to construct an optical head for WORM, two semiconductor laser chips 241 and 242 are embedded side by side on the tip of the optical head as illustrated in Fig. 13. The first semiconductor laser chip 241 is adapted for write only and the second semiconductor laser chip 242 is adapted for read only.

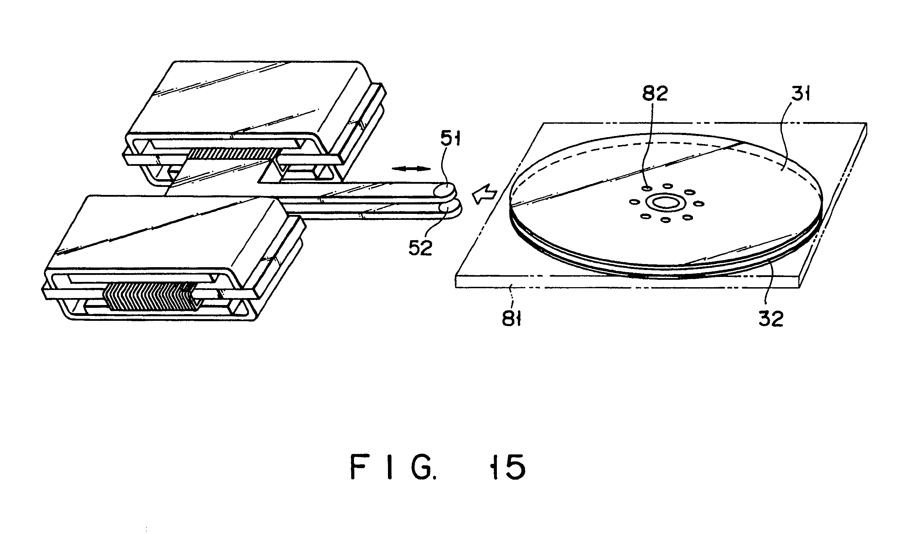

Also, in a Write Once Read Memory type of optical floppy disk system, three semiconductor laser chips 241, 242 and 243 are embedded side by side in an optical head as illustrated in Fig. 14. In this case, the semiconductor laser chip 241 is adapted for erase only, the laser chip 242 is adapted for write only and the laser chip 243 is adapted for read only. Although the above embodiments are adapted for one-sided optical floppy disk system, the present invention is likewise adaptable to two-sided optical floppy disk system for high-density recording. A schematic system configuration for two-sided optical floppy disk system is illustrated in Fig. 15. As shown, two optical floppy disks 31 and 32 are housed in a cartridge 81 with their respective recording surfaces outward and their respective central portions integral with each other. Two optical heads 51 and 52 are disposed such that they face each other and are driven together to slide along the top surface of disk 31 and the bottom surface of disk 32, respectively Each of the two optical heads 51 and 52 is the same in structure as that in the above embodiment. The optical floppy disk 31 is provided with air holes 82 in the neighborhood of its center. This is to supply air between the closely spaced floppy disks 31 and 32 which are rotating together for securing constant pressure. In the absence of the air holes separation of the two optical floppy disks 31 and 32 is impossible because a vacuum is produced therebetween. In other words, it becomes impossible for air bearing produced by disk rotation to cause the two floppy disks 31 and 32 to approach the upper head 51 and the lower head 52, respectively, with a small gap therebetween.

In addition, the on and off of laser oscillation described in connection with the above embodiment can be performed by varying a voltage or current of the semiconductor laser. This permits the photodiode to be omitted.

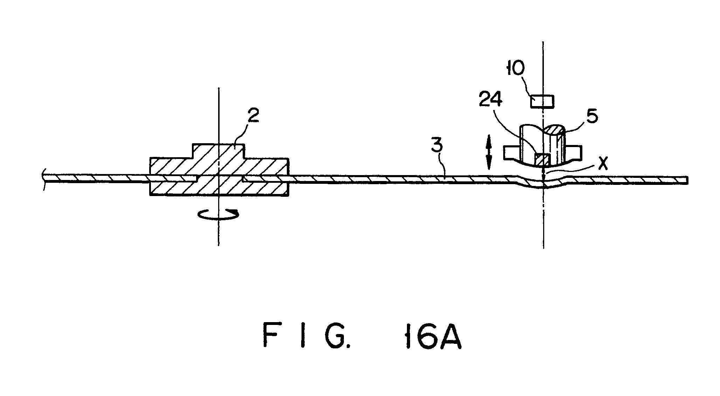

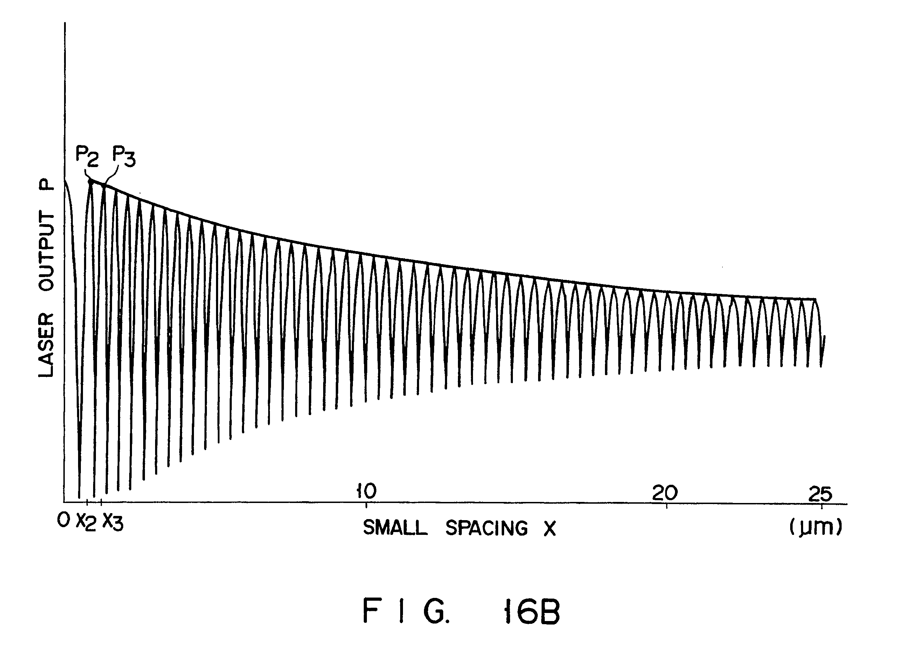

Fig. 16B is a graph showing laser output p versus laser-to-disk spacing $x$. Values of laser output p measured by the monitoring photodiode 10 through the laser chip 24 when the laser chip 24 faces the object optical floppy disk 3 with small spacing $x$ therebetween as shown in Fig. 16A are graphically depicted in the figure. As can be seen from the graph, the laser output p is roughly in inverse proportion to spacing $x$. That is, there is a tendency for the laser output to decay progressively with increasing spacing. However, the periodicity of the tendency to decay can be read from the graph. It will therefore be appreciated that an optical head is desired which can realize a small spacing $x$ when power p for writing on and reading from a recording medium exhibits as large a value as possible. More specifically, the spacing $x_2$ or $x_3$ corresponding to power $p_2$ or $p_3$ in the second or third cycle of the decay periodic curve in the graph may be the minimum spacing.

Although the preferred embodiments of the present invention have been described and disclosed, it is apparent that other embodiments and modifications are possible.

The accuracy with which to write data on an optical floppy disk is related to the shape of the pits which are formed in the disk by the irradiation of a laser beam. Data can be written with accuracy if each pit has a uniform shape, and may not be written with accuracy if each pit does not have a uniform shape.

An experiment conducted by the present inventor showed that an apparatus employing an optical head of the present invention is satisfactory in practical use. In the experiment, the adjacent tracks were successively irradiated with a laser beam. In this case, at least three pits, which had a uniform shape and could be clearly observed, could be formed in a region of several micron meters. Moreover, the pits could be arrayed in one track without overlapping with those in the adjacent track. The state of the pits was actually confirmed with a micrograph (not attached).

According to the present invention, as described above, an optical floppy disk system can be provided which enables considerable down-sizing, lightening and cost reduction of an optical head by utilization of the principle of air bearing.

## Claims

1.  An optical floppy disk system comprising:
    a floppy disk case containing said optical floppy disk in a rotatable manner and has a window of a predetermined size along its radial line;
    an optical floppy disk (3) rotatable contained in said floppy disk case; and
    an optical head including a convexity (22) facing said optical floppy disk and having a plurality of slots (23) and a predetermined curvature, and including and at least one semiconductor laser chip (24) placed in said convexity,
    wherein when said optical floppy case is loaded into an optical floppy disk drive and said optical floppy disk is rotated, said optial head is separated from said optical floppy disk, with a narrows gap formed between said floppy disk and said optical head by means of an air bearing resulting from a Bernoulli's gap formed between said optical floppy disk and said optical head.

2.  An optical floppy disk system according to claim 1, characterized in that said optical head (5) includes a ring stabilizer (25) with a predetermined diameter.

3.  An optical floppy disk system according to claim 1, characterized in that said optical head (5) includes a photodiode (26) located at the rear of said semiconductor laser chip.

4. An optical floppy disk system according to claim 1, characterized in that said semiconductor laser chip (24) has a light-emerging surface covered with an antireflection film (62).

5. An optical floppy disk system according to claim 1, characterized in that said semiconductor laser chip (24) has a pn-junction plane and is disposed such that the direction of a line normal to the pn-junction plane coincides with the direction of tracks of said optical floppy disk.

6. An optical floppy disk system according to claim 1, characterized in that said optical floppy disk (3) has a recording film (32) formed on said flexible film and a protective film (62) formed on said recording film and a thickness of 40 μm, and said recording film is formed of an organic film containing cyanin dye and adapted to record (write) information in the form of pits formed therein by light absorption and reproduce (read) information by utilization of a difference in reflectance between said pits and other portions.

7. An optical floppy disk system according to claim 1, characterized in that said recording film (32) is a rewritable recording film utilizing an organic bilayer film structure or a phase change by irradiation of light and an inorganic film using TeOx.

8. An optical floppy disk system according to claim 1, characterized in that said optical head (5) comprises a cylindrical body (21) having a convexity (22) with a predetermined curvature (R) formed on its tip, a ring stabilizer (25) attached to surround said cylindrical body, and a semiconductor laser chip (24) embedded in the tip of said convexity,

said semiconductor laser chip (24) disposed such that the direction of a line normal to its pn-junction plane coincides with the direction of tracks of said optical floppy disk and its light-emerging plane faces the surface of said optical floppy disk,

said cylindrical body serving as a heatsink for said semiconductor laser chip, and

said convexity having a plurality of slots (23) which are formed on both sides of said semiconductor laser chip.

9. An optical floppy disk system according to claim 1, characterized in that said optical head has a cylindrical body (21) in which said semiconductor laser chip is placed and a monitoring photodiode chip (26) is located at the rear of said semiconductor laser chip,

said photodiode chip being an optical detector for detecting light emerging from said semiconductor laser chip backward or light reflected from an information recording film of said optical floppy disk according to recorded information and transmitted through said semiconductor laser chip.

10. An optical floppy disk system according to claim 1, characterized in that said semiconductor laser chip is a double-hetero-junction current-confinement type of laser using an AℓGaAs-system material.

11. An optical floppy disk system according to claim 1, characterized in that said semiconductor laser chip is a double-hetero-junction current confinement type of laser using an InGaAsP-system material.

F I G. lA

F I G. lB

F I G. 2A

F I G. 2B

F I G. 3

F I G. 4A

F I G.  4 B

FIG. 5

FIG. 6

F I G. 7

F I G. 8

F I G. 9

F I G. 10

FIG. 11

FIG. 12

F I G. 13

F I G. 14

F I G. 15

EP 0 444 850 A2

FIG. 16A

F I G.   16B

EP 0 444 850 A2